# EUROPÄISCHE PATENTSCHRIFT

(11) **EP 2 783 196 B1**
(45) Veröffentlichungstag und Bekanntmachung des Hinweises auf die Patenterteilung: **02.03.2016**
(21) Anmeldenummer: 12784556.8
(22) Anmeldetag: 05.11.2012
(51) Int. Cl.: G01M 17/007, G01M 17/02

(54) **TESTANLAGE FÜR EIN MIT MINDESTENS EINEM FAHRZEUGREIFEN BESTÜCKTES FAHRZEUG**
TEST FACILITY FOR A VEHICLE EQUIPPED WITH AT LEAST ONE VEHICLE TYRE
DISPOSITIF D'ESSAI CONÇU POUR UN VÉHICULE ÉQUIPÉ D'AU MOINS UN PNEU DE VÉHICULE

(30) Priorität: 23.11.2011 DE 102011055623
(43) Veröffentlichungstag der Anmeldung: 01.10.2014
(73) Patentinhaber: Continental Reifen Deutschland GmbH, 30165 Hannover (DE)
(72) Erfinder: SPRENGER, Cord, 30519 Hannover (DE); ASENDORF, Klaus, 27318 Hoya/Weser (DE)
(74) Vertreter: Finger, Karsten
(86) Internationale Anmeldenummer: PCT/EP2012/071783
(87) Internationale Veröffentlichungsnummer: WO 2013/075927

(56) Entgegenhaltungen:
- EP-A1- 0 860 693
- GB-A- 2 392 507
- JP-A- 61 251 736
- US-B1- 7 950 276

## Beschreibung

Die Erfindung betrifft eine Testanlage nach dem Oberbegriff des Patentanspruches 1.

Es ist bekannt, Fahrzeugkomponenten auf Prüfständen zu testen, um beispielsweise deren Eigenschaften zu ermitteln und diese erforderlichenfalls zu verbessern. Je größer und umfangreicher diese Komponenten jedoch sind, umso mehr Aufwand wird für die Tests erforderlich. Letztlich werden Kraftfahrzeuge vor ihrer Serieneinführung auf speziell hierzu ausgelegten Teststrecken gefahren und unter Zuhilfenahme umfangreicher Messeelektronik auf ihre Funktionalität und gegebenenfalls noch vorhandene Schwachstellen untersucht. Derartige Teststrecken wurden aufgrund ihrer Ausdehnung bislang nicht innerhalb eines Gebäudes untergebracht. Dies hat jedoch den Nachteil, dass die gesamte Teststrecke den Umweltbedingungen ausgesetzt und damit anfällig für Beschädigungen ist, sodass nacheinander erfolgende Tests nie mit identischen Bedingungen durchführbar sind.

Eine Besonderheit besteht bei der Prüfung von Fahrzeugreifen, da diese sowohl hinsichtlich ihrer Lebensdauer, der Materialstabilität, ihres Laufverhaltens, als auch mit Bezug auf ihre Bremseigenschaften getestet werden müssen. Weil diese Tests auch unter extremen Bedingungen, wie beispielsweise Feuchtigkeit, Salzbelastung oder Schnee und Eis erfolgen, sind hierfür hauptsächlich Prüfstände in Anwendung, die sich innerhalb eines Gebäudes befinden.

Ein derartiger Rollenprüfstand geht beispielsweise aus der DE 20 2005 006 771 U1 hervor. Dieser Rollenprüfstand erlaubt die Testung von Fahrzeugkomponenten und somit auch von Fahrzeugreifen auf einem Rollenprüfstand, wobei sich dieser in einem Gebäude befindet, das mit einer Luft- und Klimatechnik ausgestattet ist. Dies hat den Vorteil, dass hierbei auch Salznebel erzeugt werden können sowie eine Bewitterung der Testkomponenten möglich ist. Erwähnt ist in der Druckschrift auch die Möglichkeit, die Bedienungsfunktionen eines Fahrers durch einen Roboter beziehungsweise durch eine Fernbedienung oder Fernsteuerung umzusetzen.

Eine etwas andere Testanlage innerhalb eines Gebäudes geht aus der JP 09061307 A hervor, wo Tests des Luftwiderstandes auf einem Rollenprüfstand unmittelbar an einem serienmäßigen Kraftfahrzeug getestet werden können.

Aus der GB 2 392 507 A geht eine Testanlage für ein mit mindestens einem Fahrzeugreifen bestücktes Fahrzeug hervor, der eine Beschleunigungsstrecke, einen Testabschnitt und eine Rückführungsstrecke aufweist, wobei das Fahrzeug von einem an einer Führung laufenden Schlitten geführt ist,

Die US 7 950 276 B1 betrifft darüber hinaus einen Prüfstand beziehungsweise eine Testanlage für Fahrzeuge, die aus mehreren unterschiedlichen Modulen beliebig zusammengesetzt werden kann, wobei die einzelnen Module jeweils den Testbedingungen angepasste Fahrbahnbeläge und Oberflächen aufweisen.

Eine ähnliche Lösung ist auch aus der EP 0 860 693 A1 bekannt. Hierbei kann die Testanlage zumindest abschnittsweise mit auswechselbaren Fahrbahnbelägen ausgestattet werden, sodass damit unterschiedliche Fahrsituationen simulierbar sind.

All diese sehr vorteilhaften Möglichkeiten gestatten jedoch lediglich die Testung eines Fahrzeuges in einem künstlich erzeugten System und lassen damit realitätsnahe Prüfungen vermissen. Somit können bisher auch die Eigenschaften eines Fahrzeugreifens unter realen, natürlichen Bedingungen, also auf dem Straßenbelag und unter Umweltbedingungen, nur bedingt und in unbefriedigender Weise getestet werden, weshalb leider auch Abweichungen zwischen mehreren aufeinanderfolgenden Testläufen hingenommen werden müssen.

Der Erfindung liegt die Aufgabe zugrunde, eine Testanlage bereitzustellen, die Versuche an und mit Fahrzeugen sowie an deren Elementen und Systemen realitätsnah ermöglicht und dabei flexibel veränderbar sowie im Aufbau einfach ausgeführt ist.

Die Erfindung löst diese Aufgabenstellung mit den kennzeichnenden Merkmalen des Patentanspruches 1.

Weitere Ausgestaltungen der Erfindung sind Gegenstand der Unteransprüche.

Eine Testanlage für ein mit mindestens einem Fahrzeugreifen bestücktes Fahrzeug, aufweisend eine Beschleunigungsstrecke, einen Testabschnitt und eine Rückführungsstrecke, wobei das Fahrzeug von einem an einer Führung laufenden Schlitten geführt ist, wurde erfindungsgemäß dahin gehend weitergebildet, dass sich zumindest ein wesentlicher Teil der Testanlage im Innenraum eines Gebäudes befindet und der Testabschnitt quer zur Fahrtrichtung und/oder längs der Fahrtrichtung des Fahrzeugs verschiebbar ist.

Mit der erfindungsgemäßen Lösung ist es gelungen, sowohl innerhalb eines Gebäudes, als auch unter Umweltbedingungen Tests an Fahrzeugen durchzuführen. Dabei besteht keine Einschränkung, ob einzelne Komponenten, Systeme oder das Gesamtfahrzeug getestet werden sollen. Die Testanlage nach der Erfindung ist folglich extrem flexibel einsetzbar und eignet sich damit auch und im Besonderen für die Testung von Fahrzeugreifen. Durch die Führung des Fahrzeugs an einem Schlitten wird eine sehr exakte Spurführung ermöglicht, so dass die Ergebnisse hundertprozentig reproduzierbar sind. Diese Führung ermöglicht zudem eine Automatisierung des gesamten Tests, so dass bei Einsatz eines Komplettfahrzeuges, also beispielsweise eines Pkw, kein Fahrer benötigt wird. Auf dem Testabschnitt können dabei sowohl einzelne Fahrzeugreifen, als auch mehrere Fahrzeugreifen gleichzeitig getestet werden. Zudem lassen sich bei Einsatz eines Komplettfahrzeuges die Eigenschaften der Fahrzeugreifen am konkreten Fahrzeug testen, was gegenüber bisherigen Prüfstandstestungen entscheidende Vorteile mit sich bringt. Die Testanlage ermöglicht es, sowohl trockene, nasse, als auch mit Eis und/oder Schnee bedeckte Fahrbahnverhältnisse mit realen Bedingungen zu schaffen. Die Reproduzierbarkeit der Testergebnisse und ihre Qualität konnten durch die Testanlage nach der Erfindung im Vergleich zu bisherigen Testungen entscheidend verbessert werden. Von besonderem Vorteil ist dabei, dass sowohl im Innen-, als auch im Außenbereich Tests durchgeführt werden können. Die Verschiebbarkeit des Testabschnittes gestattet zudem ein hohes Maß an Flexibilität.

Eine erste Ausgestaltung der Erfindung besteht darin, dass die Bewegbarkeit des Testabschnittes sich nicht nur auf den Testabschnitt insgesamt bezieht, sondern auch einzelne Fahrstreifen des Testabschnittes, die unterschiedliche Fahrbahnbeläge aufweisen, quer zur Fahrtrichtung und/oder längs der Fahrtrichtung des Fahrzeugs verschiebbar sind. Auf diese Weise lässt sich zum Beispiel ein Fahrstreifen nutzen, um das Fahrzeug innerhalb des Gebäudes zu testen, während im Anschluss daran derselbe Fahrstreifen beispielsweise durch eine Längsbewegung in Fahrtrichtung des Fahrzeugs in einen Abschnitt außerhalb des Gebäudes überführt wird, so dass hier der Testlauf unter Umweltbedingungen fortgeführt werden kann. Die Testanlage führt somit zu erheblichen Zeiteinsparungen bei der Durchführung der Tests.

Darüber hinaus geht eine Ausführung der Erfindung dahin, dass sich die gesamte Testanlage im Innenraum des Gebäudes befindet. Bei dieser Variante ist keine Teststrecke außerhalb des Gebäudes vorgesehen, um möglichst unbeeinflusst von Umweltbedingungen reale Testergebnisse, bevorzugt am kompletten Fahrzeug zu erzielen. Hier lassen sich die klimatischen Bedingungen exakt einstellen sowie die für den Test zu bestimmenden Parameter sehr genau bestimmen. Zwar ist bei dieser Ausführung ein Gebäude mit erheblichen Ausmaßen erforderlich, die Vorteile einer derartigen Lösung überwiegen jedoch.

Eine Weiterbildung der Erfindung sieht ferner vor, dass der Innenraum des Gebäudes klimatisiert ist. Diese Maßnahme trägt ganz entscheidend dazu bei, gleich bleibende Testbedingungen zu schaffen, die auch zuverlässig reproduzierbar sind.

Eine erfindungsgemäße Testanlage ist jedoch auch dazu geeignet, einen Fahrzeugreifen mehrfach und in verschiedener Hinsicht zu testen, weshalb dieser die gesamte Teststrecke auch mehrfach durchlaufen kann. Während dieser Testphase wird der Fahrzeugreifen nicht vom Fahrzeug abmontiert. Aus diesem Grund geht ein weiterer Vorschlag dahin, zur Vorbereitung und Zuführung beziehungsweise Entnahme des Fahrzeugs eine Montageeinheit vorzusehen. Diese Montageeinheit kann der eigentlichen Teststrecke vorangestellt oder angefügt werden. Im Rahmen der Montageeinheit erfolgt der Aufbau des Fahrzeugs und dessen Vorbereitung für den Test beziehungsweise seine Nachbereitung, nachdem der Test abgeschlossen ist.

Eine weitere Besonderheit der hier vorgestellten Testanlage besteht darin, dass die Beschleunigungsstrecke, der Testabschnitt und die Rückführungsstrecke eine Fahrschleife bilden. Somit können die Fahrzeuge während des Testbetriebs permanent umlaufen und die gleiche Teststrecke immer wieder durchfahren, bis der eigentliche Versuch beendet ist. In Kombination mit dem Merkmal, dass das Fahrzeug an einem Schlitten geführt ist, wird somit auch verständlich, dass hier die Versuchsergebnisse reproduzierbar und in gleichbleibender Qualität durchführbar sind.

Von Vorteil ist es ferner, wenn der Testabschnitt mehrere Fahrbahnbeläge aufweist, von denen je Fahrversuch einer im Bereich der zu durchfahrenden Teststrecke angeordnet ist. Durch die Bewegbarkeit des Testabschnittes quer zur Fahrtrichtung und/oder längs der Fahrtrichtung des Fahrzeugs können die Fahrbahnbeläge nahezu beliebig ausgetauscht werden, ohne dass hierzu erhebliche Aufwendungen erforderlich sind. Der Testabschnitt wird einfach so weit verschoben, bis er sich in der Spur des zu testenden Fahrzeugreifens befindet. Das Fahrzeug mit dem zu testenden Fahrzeugreifen kann auf diese Weise einmalig oder mehrmals hintereinander über diesen Fahrbahnbelag geführt werden, bevor ein Wechsel auf einen anderen Fahrbahnbelag erfolgt, den er ohne Änderungen an der Versuchsanlage erneut überfahren kann. Durch diese Maßnahme kann auch ein kontinuierlicher Testlauf unter verschiedensten Bedingungen durchgeführt werden, was erhebliche Zeit- und Kostenvorteile mit sich bringt. Es besteht sogar die Möglichkeit, dass das Fahrzeug ohne einen Zwischenstopp einlegen zu müssen, permanent umläuft und der Testabschnitt dabei verschoben wird.

Eine einfache Ausführungsvariante der Gestaltung des Testabschnittes besteht darin, dass der Testabschnitt aus einer Wanne besteht, in die parallel zueinander mehrere, einzeln oder insgesamt austauschbare Fahrbahnbeläge eingelassen sind. So besteht beispielsweise die Möglichkeit, neben einem Asphaltauftrag, Kies, Schotter, Sand, Pflastersteine oder andere Fahrbahnbeläge vorzusehen, die jeweils einen Streifen bilden, der in die Wanne eingelassen ist.

Um die Bewegbarkeit des Testabschnittes zu erleichtern, können Gleitlager ebenso zum Einsatz kommen, wie Kugellager oder eine ein Luftpolster erzeugende Pneumatik beziehungsweise ein hydraulisches System.

Darüber hinaus besteht die vorteilhafte Möglichkeit, in den Testabschnitt Kühlschlangen zur Erzeugung einer Eis- oder Schneeoberfläche zu integrieren.

Weiterhin kann der Testabschnitt mit einer Berieselungsanlage bewässert und/oder beschneit werden.

All diese Möglichkeiten und Varianten sind dazu gedacht, ein Fahrzeug beziehungsweise einen Fahrzeugreifen unter allen denkbaren Einsatzbedingungen zu testen und dabei mit der erfindungsgemäßen Testanlage zuverlässig reproduzierbare Ergebnisse zu erzielen. Eine weitere Besonderheit einer erfindungsgemäßen Testanlage ist auch darin zu sehen, dass anstelle der normalerweise auf Teststrecken üblichen Kurven hier an den Wendepunkten der Teststrecke Drehkränze zum Einsatz kommen. Neben diesen Einsatzzwecken für die Drehkränze besteht auch die Möglichkeit, einen Drehkranz zu verwenden, um das Fahrzeug auf die Teststrecke zu bringen oder es von ihr zu entfernen. Bei der zuletzt genannten Variante werden folglich mehr Drehkränze vorhanden sein, als Kurven in der Teststrecke.

Um die Reproduzierbarkeit der Versuchsergebnisse weiter zu verbessern, wird ferner vorgeschlagen, dass das Fahrzeug mittels eines auf das Beschleunigungspedal oder das Bremspedal einwirkenden Roboters oder durch einen Eingriff in die Bordelektronik steuerbar ist. Durch den Ersatz des Faktors "Mensch" wird die Genauigkeit der Versuchsergebnisse deutlich verbessert. Fehler und Reaktionsverzögerungen, die ein Fahrer eines Fahrzeugs gegebenenfalls verursachen würde, sind auf diese Weise ausschließbar.

Ein besonderer Vorteil ist ferner darin zu sehen, wenn zur Beschleunigung des Fahrzeugs ein Linearmotor zum Einsatz kommt. Dieser ist ähnlich dem "Transrapid-Prinzip" aufgebaut und nimmt das Fahrzeug über eine Kupplung auf, um es anschließend zu beschleunigen. Darüber hinaus sind in an sich bekannter Weise auch beispielsweise Seilsysteme oder andere Antriebe einsetzbar, ohne den Bereich der Erfindung zu verlassen. Der Fachmann wird hieraus eine Auswahl entsprechend der Gegebenheiten beziehungsweise Vorgaben treffen.

Eine besonders einfache Ausführungsvariante der Erfindung besteht darin, dass die Führung aus einem umlaufenden Schienensystem besteht. Das Fahrzeug kann ohne großen Aufwand an diesem Schienensystem geführt werden. Zudem lassen sich die Schienen in beliebiger Weise verlegen, so dass die Versuchsstrecke flexibel ausgeführt und jederzeit ohne großen Aufwand verändert werden kann.

Während der Schlitten permanent mit dem Fahrzeug gekoppelt ist und seine Seitenführung gewährleistet, wird eine weitere vorteilhafte Ausführung der Erfindung darin gesehen, dass der Schlitten mit einem Wagen zur Zuführung des Fahrzeugs koppelbar ist. Die Kopplung zwischen Wagen und Schlitten wird während des Versuchslaufs aufgelöst. Nach Abschluss des Versuchs wird der Wagen herangeführt und kann somit über die wiederhergestellte Kopplung zum Schlitten das Fahrzeug in seine Ausgangsposition zurück führen. Als Kopplung ist beispielsweise eine Verbindung über Elektromagnete oder eine einfache Kupplung, wie eine Anhängerkupplung oder eine Bolzenverbindung möglich.

Eine weitere Ausgestaltung der Erfindung besteht darin, dass zur Konditionierung und/oder zum Warmfahren der Fahrzeugreifen eine zusätzliche Rollenkonstruktion vorhanden ist. Diese Maßnahme ist nur unter bestimmten Bedingungen erforderlich, da ein Warmfahren der Fahrzeugreifen auch auf der Beschleunigungsstrecke erfolgen kann.

Es bedarf keiner besonderen Erwähnung, dass als Fahrzeug ein handelsüblicher Personenkraftwagen (PKW) oder Nutzkraftwagen (NKW) oder ein handelsübliches Motorrad zum Einsatz kommen können.

Die Erfindung wird nachfolgend anhand der beigefügten Zeichnungen näher erläutert. Die gezeigten Ausführungsbeispiele stellen keine Einschränkung auf die dargestellten Varianten dar, sondern dienen lediglich der Erläuterung eines Prinzips der Erfindung. Dabei sind gleiche oder gleichartige Bauteile mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: eine schematisch stark vereinfachte Darstellung einer ersten Ausführung einer Testanlage,
- Figur 2:: eine schematisch stark vereinfachte Darstellung einer zweiten Ausführung einer Testanlage,
- Figur 3:: einen Schlitten sowie einen Wagen zur Führung des Fahrzeugs in einer ersten Ausführung,
- Figur 4:: die Führung des Fahrzeugs mit einem Linealmotor als Antrieb zur Fahrzeugbeschleunigung,
- Figur 5:: in den Bildteilen a), b) und c) drei verschiedene Fahrzeuge zum Einsatz auf der Testanlage,
- Figur 6:: einen Schlitten sowie einen Wagen zur Führung des Fahrzeugs in einer zweiten Ausführung
- und Figur 7:: eine grobe Übersicht über einen Versuchsablauf innerhalb der erfindungsgemäßen Testanlage.

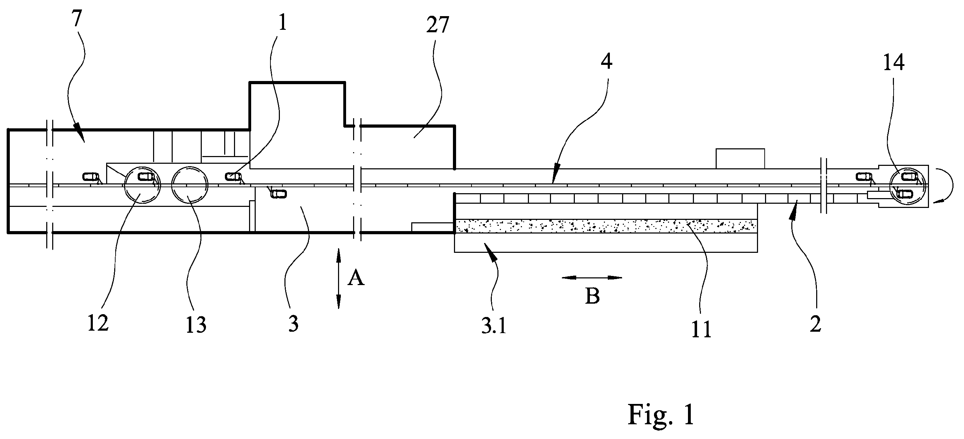

Die in der Figur 1 gezeigte, stark vereinfachte Darstellung einer ersten Ausführung einer erfindungsgemäßen Testanlage besteht im wesentlichen aus einem mit dicken Linien umrandeten Gebäude, wobei bei dieser Ausführung auch ein Außenbereich vorhanden ist.

Die wesentlichen Elemente der Testanlage sind der Testabschnitt 3, die Rückführungsstrecke 4 und die Beschleunigungsstrecke 2. Insgesamt ist die Testanlage als Fahrschleife ausgebildet.

Bei Durchführung eines Tests wird zunächst ein Fahrzeug 1 im Bereich der Montageeinheit 7 auf den Test vorbereitet, was bedeutet, dass das Fahrzeug 1 mit den entsprechenden Messinstrumenten sowie der Steuerungselektronik ausgestattet wird. Ein derartig vorbereitetes Fahrzeug 1 wird über den ersten Drehkranz 12 auf die Teststrecke gebracht. Das Fahrzeug 1 kann anschließend über die Rückführungsstrecke 4 bis zum Drehkranz 14 geführt, dort gewendet und anschließend auf der Beschleunigungsstrecke 2 auf die für den Test erforderliche Geschwindigkeit gebracht werden. Mit dieser Geschwindigkeit überfährt das Fahrzeug 1 nunmehr den Testabschnitt 3, wo die einzelnen Messungen und Tests, also beispielsweise Bremstests, erfolgen. Im Anschluss an den Testabschnitt 3 wird das Fahrzeug 1 erforderlichenfalls weiter abgebremst und durch den Drehkranz 13 umgelenkt, so dass es anschließend einen erneuten Testzyklus durchlaufen kann. Hierzu dient wiederum die Rückführungsstrecke 4. Soll der Test jedoch beendet werden, besteht die Möglichkeit, das Fahrzeug 1 über den Drehkranz 12 der Montageeinheit 7 zuzuführen und es damit aus der Teststrecke zu entnehmen.

Die Besonderheit der erfindungsgemäßen Testanlage besteht darin, dass der Testabschnitt 3 als Ganzes in Richtung des Pfeils "A" und/oder in Richtung des Pfeils "B" verschoben werden kann. Darüber hinaus ist die Möglichkeit gegeben, einzelne Fahrstreifen mit darauf angeordneten Fahrbahnbelägen 8, 9, 10, 11 quer und/oder längs der Fahrtrichtung des Fahrzeugs 1 zu verschieben.

In der Figur 1 ist zum besseren Verständnis ein Teil des Testabschnittes 3 längs der Fahrtrichtung des Fahrzeugs 1, also in Richtung des Pfeils "B", verschoben dargestellt. Dieser Testabschnitt 3.1 mit dem Fahrbahnbelag 11 befindet sich hierbei außerhalb des Gebäudes. Eine weitere Besonderheit des Beispiels in Figur 1 besteht darin, dass hierbei eine zusätzliche Eishalle 27 einen Bestandteil der Testanlage bildet.

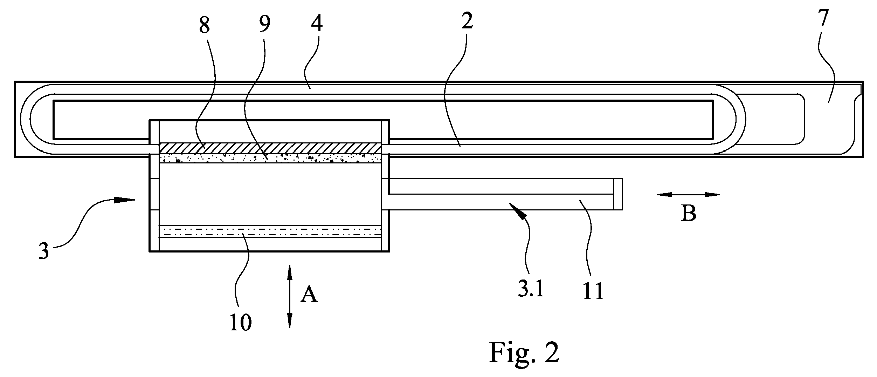

Aus der Figur 2 geht eine weitere Möglichkeit der Ausführung einer erfindungsgemäßen Testanlage hervor. Diese weist im rechten Bildteil eine Montageeinheit 7 auf, mittels der in der zuvor beschriebenen Weise Fahrzeuge 1 vorbereitet oder nachbereitet werden können. Ein in der Montageeinheit 7 vorbereitetes Fahrzeug 1 kann anschließend in die schleifenförmig ausgeführte Teststrecke überführt werden. Auch diese Testanlage besteht aus einer Beschleunigungsstrecke 2, einem Testabschnitt 3 und einer Rückführungsstrecke 4. Hierbei wurden zur Umlenkung der Fahrzeuge jedoch keine Drehkränze verwendet. Vielmehr weist diese Testanlage herkömmliche Kurven auf. Der Testabschnitt 3 verfügt, wie auch bei dem zuvor bereits erläuterten Beispiel, über mehrere Fahrbahnbeläge 8, 9, 10, 11, die, wie dies in der Figur 2 angedeutet ist, unterschiedlicher Art sein können. So ist es beispielsweise möglich, innerhalb des Testabschnittes 3 eine Asphaltsoberfläche 8, eine Kiesschicht 9, eine Betonoberfläche 10 und eine Kopfsteinpflasteroberfläche 11 gleichermaßen abzubilden. Der gesamte Testabschnitt 3 kann hierbei in Richtung des Pfeils "A" verschoben werden. Zudem besteht die Möglichkeit, einzelne Fahrstreifen mit einem Fahrbahnbelag 11 in Längsrichtung der Testanlage, also längs der Fahrtrichtung des Fahrzeugs 1 zu verschieben (Richtung des Pfeils "B"). Die in der Figur 2 gezeigte Ausführung einer Testanlage ist als vollständig innerhalb eines Gebäudes angeordnete Testanlage vorgesehen.

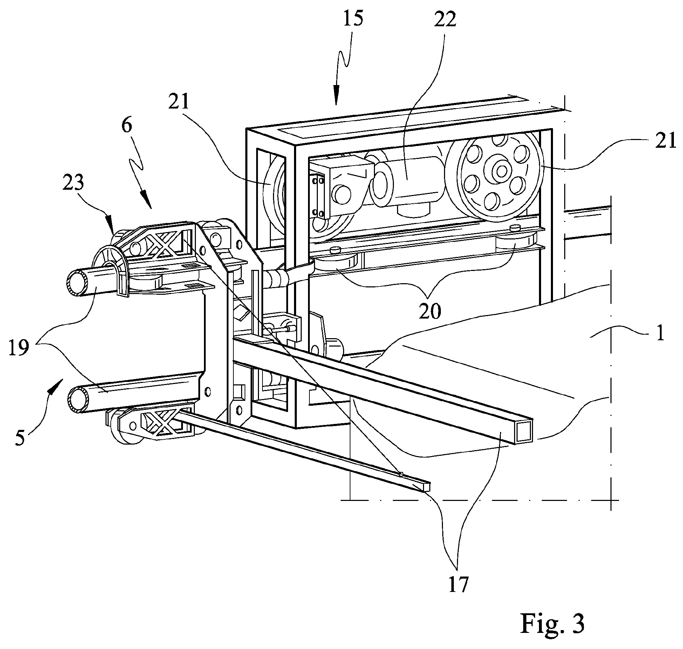

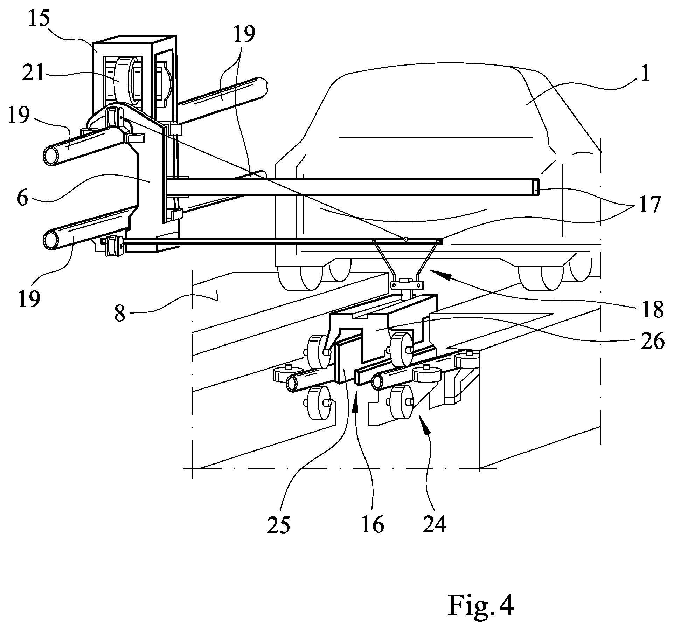

Die Figuren 3 und 4 veranschaulichen die Befestigung eines Fahrzeugs 1 an der Führung 5 der Testanlage. Wie aus den Darstellungen ersichtlich wird, handelt es sich bei dem Fahrzeug 1 um ein Komplettfahrzeug, das heißt, um einen Pkw. Somit lassen sich mit der Testanlage reale Testbedingungen unmittelbar am Fahrzeug 1 schaffen. Das Fahrzeug 1 wird über ein Querführungsgestänge 17 geführt, das ihm insbesondere Seitenstabilität gewährt. Dieses Querführungsgestänge 17 ist Bestandteil eines Schlittens 6, der über ein Radführungssystem 23 entlang der durch Schienen 19 gebildeten Führung 5 geführt ist. Der Schlitten 6 wird darüber hinaus zeitweise mit einem Wagen 15 gekoppelt, der seinerseits über einen eigenen Antrieb verfügt. Als Antrieb dient dem Wagen 15 vorliegend ein Elektromotor 22, wobei andere Antriebsarten möglich sind. Der Wagen 15 ist darüber hinaus mit Laufrädern 21 und Führungsrädern 20 ausgestattet, so dass er wie auch der Schlitten 6 über ein Radführungssystem verfügt, dass es ihm ermöglicht unter stabilen und gleichmäßigen Bedingungen entlang der Führung 5 zu fahren. Die Funktion des Wagens 15 besteht darin, das Fahrzeug 1 mit samt dem Schlitten 6 in eine vorgesehene Position zu Beginn der Beschleunigungsstrecke 2 zu bringen. In diesem Abschnitt wird der Wagen 15 vom Schlitten 6 entkoppelt, so dass der Schlitten 6 mit dem daran angebundenen Fahrzeug 1 den weiteren Verlauf der Teststrecke absolviert. Nach Abschluss des Tests wird der Wagen 15 wieder an den Schlitten 6 herangeführt und mit dem Schlitten 6 gekoppelt, so dass das Fahrzeug 1 erneut zugeführt werden kann.

Die für die Testzwecke erforderliche Beschleunigung des Fahrzeugs 1 wird hierbei durch einen Linearmotor 16 bewirkt. Dieser geht anschaulich aus der Darstellung in Figur 4 hervor. Der nach dem Grundprinzip des "Transrapid" aufgebaute Linearmotor 16 besteht aus einem plattenförmig ausgeführten Stator 25, der U-förmig von einem als Rotorwagen 26 ausgeführten Rotor umgriffen wird, ohne dass hierbei ein Berührungskontakt erfolgt. Der Rotorwagen 26 wird ebenfalls an Schienen entlanggeführt, wobei zur Führung ein Radführungssystem 24 dient, dessen Aufbau dem zuvor bereits beschriebenen Radführungssystem des Wagens 15 entspricht. Das Fahrzeug 1 wird mit einer Befestigungseinheit 18 des Rotorwagens 26 gekoppelt und kann somit durch den Linearmotor 16 beschleunigt werden. Die Figur 4 zeigt auch noch einmal die Verbindung des Fahrzeugs 1 mit dem Schlitten 6 und dem Wagen 15, die beide entlang der aus Schienen 19 gebildeten Führung 5 geführt sind.

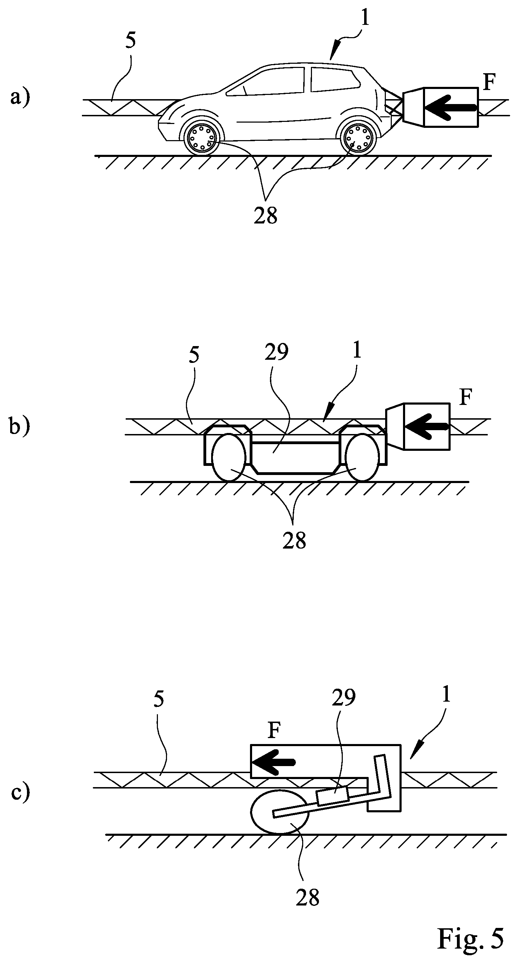

In den Bildteilen a), b) und c) der Figur 5 sind beispielhaft drei verschiedene Fahrzeuge 1 zum Einsatz auf der Testanlage dargestellt.

Im Bildteil a) handelt es sich um einen kompletten, serienmäßigen Personenkraftwagen, sodass hier ein Test unter realen Fahrzeugbedingungen am fertiggestellten Fahrzeug 1 erfolgen kann. Durch den Pfeil "F" wurde eine auf das Fahrzeug 1 einwirkende Kraft nur symbolisch dargestellt, die selbstverständlich durch einen Antriebsmotor oder eine anders geartete Antriebskraft auf das Fahrzeug 1 übertragen werden kann.

Das Fahrzeug 1 im Bildteil b) ist hingegen ein spezielles Testfahrzeug, das vorliegend individuell anpassbar ist und beispielsweise mit Gewichten 29 zur Einstellung der Belastung der zu testenden Fahrzeugräder 28 ausgestattet werden kann. Die Fahrzeugräder 28 sind in herkömmlicher Weise mit Fahrzeugreifen ausgerüstet. Bei diesem Fahrzeug 1 besteht die Möglichkeit, sowohl ein mit vier, als auch mit zwei Fahrzeugrädern 28 ausgestattetes Fahrzeug 1 einzusetzen.

Schließlich ist im Bildteil c) ein Fahrzeug 1 gezeigt, das zur Testung eines einzigen Fahrzeugrades 28 beziehungsweise des darauf montierten Fahrzeugreifens eingesetzt werden kann. Auch bei diesem Fahrzeug 1 erfolgt der Antrieb über eine symbolisch dargestellte Kraft "F" und es besteht die Möglichkeit, das Fahrzeug 1 mit Gewichten 29 zu versehen.

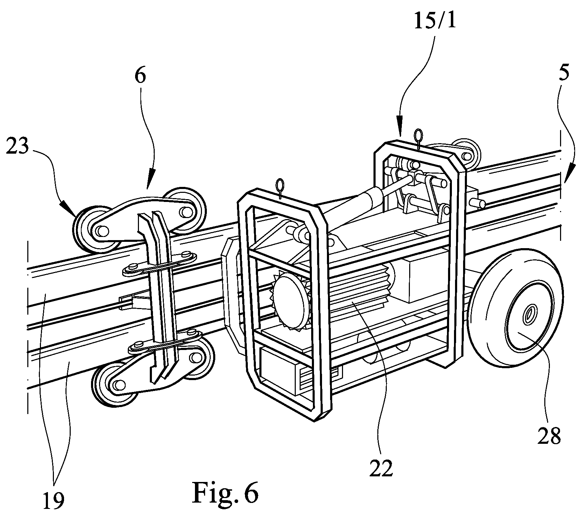

Die Darstellung in Figur 6 zeigt ein Fahrzeug 1, dass für Tests an nur einem Fahrzeugrad 28 beziehungsweise dem darauf montierten Fahrzeugreifen zum Einsatz kommt nehr im Detail. Das Fahrzeug 1 setzt sich hierbei aus dem eingangs bereits beschriebenen Wagen 15 und einem mit dem Wagen 15 verbundenen Schlitten 6 zusammen. Der Schlitten 6 weist ein Radführungssystem 23 auf, mit dem er auf den Schienen 19 der Führung 5 geführt ist. Als Antrieb dient im vorliegenden Fall ein Elektromotor 22, so dass der Wagen 15 in diesem Fall als selbstfahrendes Testfahrzeug verwendet wird.

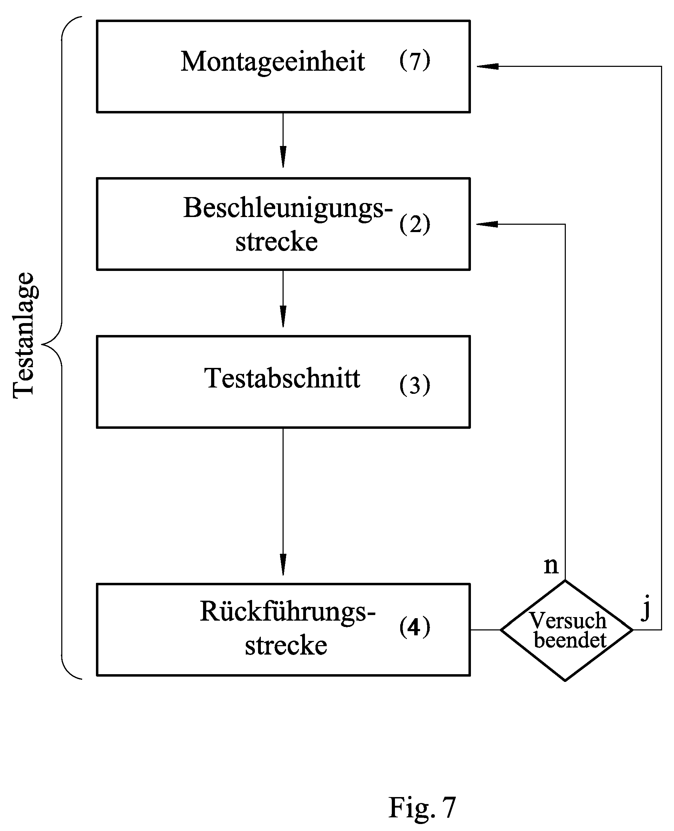

Der Ablauf eines Testverfahrens mit einer erfindungsgemäßen Testanlage wird in vereinfachter Form in der Figur 7 gezeigt. Zunächst erfolgt die Vormontage des Fahrzeugs 1 in der Montageeinheit 7. Anschließend wird das Fahrzeug 1 auf die Beschleunigungsstrecke 2 gebracht, hier beschleunigt, um anschließend den Testabschnitt 3 zu durchlaufen, wo die erforderlichen Tests durchgeführt werden. Nach Absolvierung des Testabschnittes 3 erfolgt eine Rückführung des Fahrzeugs 1 über die Rückführungsstrecke 4, um entweder aus der Teststrecke entnommen zu werden oder eine erneute Testschleife zu durchlaufen. Diese Auswahlmöglichkeit wurde in der Darstellung in Figur 5 durch den rautenförmigen Kasten "Versuch beendet" dargestellt. Hier ergibt sich folglich eine Verzweigung des Versuchsablaufs.

### Bezugszeichenliste

- 1: Fahrzeug
- 2: Beschleunigungsstrecke
- 3: Testabschnitt
- 3.1: Testabschnitt außen
- 4: Rückführungsstrecke
- 5: Führung
- 6: Schlitten
- 7: Montageeinheit
- 8: Fahrbahnbelag
- 9: Fahrbahnbelag
- 10: Fahrbahnbelag
- 11: Fahrbahnbelag
- 12: Drehkranz
- 13: Drehkranz
- 14: Drehkranz
- 15: Wagen
- 16: Linearmotor
- 17: Querführungsgestänge
- 18: Befestigungseinheit
- 19: Schiene
- 20: Führungsräder
- 21: Laufräder
- 22: Elektromotor
- 23: Radführungssystem
- 24: Radführungssystem
- 25: Stator (plattenförmig)
- 26: Rotorwagen
- 27: Eishalle
- 28: Fahrzeugrad
- 29: Gewicht

## Patentansprüche

1. Testanlage für ein mit mindestens einem Fahrzeugreifen bestücktes Fahrzeug (1), aufweisend eine Beschleunigungsstrecke (2), einen Testabschnitt (3) und eine Rückführungsstrecke (4), wobei das Fahrzeug (1) von einem an einer Führung (5) laufenden Schlitten (6) geführt ist,
**dadurch gekennzeichnet, dass**
sich zumindest ein Teil der Testanlage im Innenraum eines Gebäudes befindet und der Testabschnitt (3) quer zur Fahrtrichtung und/oder längs der Fahrtrichtung des Fahrzeugs (1) verschiebbar ist.

2. Testanlage nach Anspruch 1,
**dadurch gekennzeichnet, dass**
einzelne Fahrstreifen mit jeweils unterschiedlichen Fahrbahnbelägen (8, 9, 10) des Testabschnittes (3) quer zur Fahrtrichtung und/oder längs der Fahrtrichtung des Fahrzeugs (1) verschiebbar sind.

3. Testanlage nach einem der vorstehend genannten Ansprüche,
**dadurch gekennzeichnet, dass**
sich die gesamte Testanlage im Innenraum des Gebäudes befindet.

4. Testanlage nach einem der vorstehend genannten Ansprüche,
**dadurch gekennzeichnet, dass**
der Innenraum des Gebäudes klimatisiert ist.

5. Testanlage nach einem der vorstehend genannten Ansprüche,
**dadurch gekennzeichnet, dass**
eine Montageeinheit (7) zur Vorbereitung und Zuführung beziehungsweise Entnahme des Fahrzeugs (1) vorhanden ist.

6. Testanlage nach einem der vorstehend genannten Ansprüche,
**dadurch gekennzeichnet, dass**
die Beschleunigungsstrecke (2), der Testabschnitt (3) und die Rückführungsstrecke (4) eine Fahrschleife bilden.

7. Testanlage nach einem der vorstehend genannten Ansprüche,
**dadurch gekennzeichnet, dass**
der Testabschnitt (3) mehrere Fahrbahnbeläge (8, 9, 10) aufweist, von denen je Fahrversuch einer im Bereich der zu durchfahrenden Teststrecke angeordnet ist.

8. Testanlage nach einem der vorstehend genannten Ansprüche,
**dadurch gekennzeichnet, dass**
der Testabschnitt (3) aus einer Wanne besteht, in die parallel zueinander mehrere, einzeln oder insgesamt austauschbare Fahrbahnbeläge (8, 9, 10, 11) eingelassen sind.

9. Testanlage nach einem der vorstehend genannten Ansprüche,
**dadurch gekennzeichnet, dass**
der Testabschnitt (3) auf Kugel- oder Gleitlagern oder auf einem Luftpolster beziehungsweise hydraulisch verschiebbar gelagert ist.

10. Testanlage nach einem der vorstehend genannten Ansprüche,
**dadurch gekennzeichnet, dass**
der Testabschnitt (3) Kühlschlangen zur Erzeugung einer Eis- oder Schneeoberfläche aufweist.

11. Testanlage nach einem der vorstehend genannten Ansprüche,
**dadurch gekennzeichnet, dass**
der Testabschnitt (3) mit einer Berieselungsanlage bewässerbar und/oder beschneibar ist.

12. Testanlage nach einem der vorstehend genannten Ansprüche,
**dadurch gekennzeichnet, dass**
die Testanlage mehrere Drehkränze (12, 13, 14) aufweist und die Wendebereiche der Testanlage aus Drehkränzen (13, 14) bestehen.

13. Testanlage nach einem der vorstehend genannten Ansprüche,
**dadurch gekennzeichnet, dass**
das Fahrzeug (1) mittels eines auf das Beschleunigungspedal oder das Bremspedal einwirkenden Roboters oder durch einen Eingriff in die Bordelektronik steuerbar ist.

14. Testanlage nach einem der vorstehend genannten Ansprüche,
**dadurch gekennzeichnet, dass**
zur Beschleunigung des Fahrzeugs (1) ein Linearmotor (16) oder ein Seilsystem vorhanden ist.

15. Testanlage nach einem der vorstehend genannten Ansprüche,
**dadurch gekennzeichnet, dass**
die Führung (5) aus einem umlaufenden Schienensystem besteht.

16. Testanlage nach einem der vorstehend genannten Ansprüche,
**dadurch gekennzeichnet, dass**
der Schlitten (6) mit einem Wagen (15) zur Zuführung des Fahrzeugs (1) koppelbar ist.

17. Testanlage nach einem der vorstehend genannten Ansprüche,
**dadurch gekennzeichnet, dass**
zur Konditionierung und/oder zum Warmfahren der Fahrzeugreifen eine Rollenkonstruktion vorhanden ist.

18. Testanlage nach einem der vorstehend genannten Ansprüche,
**dadurch gekennzeichnet, dass**
das Fahrzeug (1) ein Personenkraftwagen (PKW) oder Nutzkraftwagen (NKW) oder ein Motorrad ist.

## Claims

1. Test facility for a vehicle (1) equipped with at least one vehicle tire, comprising an acceleration track (2), a test section (3) and a return track (4), wherein the vehicle (1) is guided by a slide (6) running on a guide (5), **characterized in that** at least one part of the test facility is located inside a building and the test section (3) is able to be displaced transversely to the direction of travel and/or longitudinally in the direction of travel of the vehicle (1).

2. Test facility according to Claim 1, **characterized in that** individual lanes of the test section (3) with in each case different road surfaces (8, 9, 10) are able to be displaced transversely to the direction of travel and/or longitudinally in the direction of travel of the vehicle (1).

3. Test facility according to one of the preceding claims, **characterized in that** the entire test facility is located inside the building.

4. Test facility according to one of the preceding claims, **characterized in that** the inside of the building is air-conditioned.

5. Test facility according to one of the preceding claims, **characterized in that** an assembly unit (7) is present for preparing and transporting and/or removing the vehicle (1).

6. Test facility according to one of the preceding claims, **characterized in that** the acceleration track (2), the test section (3) and the return track (4) form a track loop.

7. Test facility according to one of the preceding claims, **characterized in that** the test section (3) comprises a plurality of road surfaces (8, 9, 10), one of which is arranged in the region of the test track to be traveled on for each test drive.

8. Test facility according to one of the preceding claims, **characterized in that** the test section (3) consists of a depression into which several road surfaces (8, 9, 10, 11) which are able to be exchanged individually or together are incorporated parallel to one another.

9. Test facility according to one of the preceding claims, **characterized in that** the test section (3) is displaceably mounted on ball bearings or plain bearings or on an air cushion and/or by hydraulic means.

10. Test facility according to one of the preceding claims, **characterized in that** the test section (3) comprises cooling coils for producing a surface covered with ice or snow.

11. Test facility according to one of the preceding claims, **characterized in that** the test section (3) is able to be wetted and/or covered with snow using a sprinkler system.

12. Test facility according to one of the preceding claims, **characterized in that** the test facility comprises a plurality of turntables (12, 13, 14) and the turning areas of the test facility consist of turntables (13, 14).

13. Test facility according to one of the preceding claims, **characterized in that** the vehicle (1) is able to be controlled by means of a robot acting on the accelerator pedal or the brake pedal or by operating the on-board electronics.

14. Test facility according to one of the preceding claims, **characterized in that** for accelerating the vehicle (1) a linear motor (16) or a cable system is present.

15. Test facility according to one of the preceding claims, **characterized in that** the guide (5) consists of a circulating rail system.

16. Test facility according to one of the preceding claims, **characterized in that** the slide (6) is able to be coupled to a carriage (15) for transporting the vehicle (1).

17. Test facility according to one of the preceding claims, **characterized in that** a rolling structure is present for conditioning and/or for warming up the vehicle tires.

18. Test facility according to one of the preceding claims, **characterized in that** the vehicle (1) is a passenger motor vehicle or utility vehicle or a motorcycle.

## Revendications

1. Dispositif d'essai conçu pour un véhicule (1) équipé d'au moins un pneu de véhicule, présentant une section d'accélération (2), une section d'essai (3) et une section de retour (4), le véhicule (1) étant guidé par un chariot (6) roulant sur un guide (5),
**caractérisé en ce**
**qu'**au moins une partie du dispositif d'essai se trouve dans l'espace intérieur d'un bâtiment et la section d'essai (3) peut être déplacée transversalement à la direction de conduite et/ou le long de la direction de conduite du véhicule (1).

2. Dispositif d'essai selon la revendication 1,
**caractérisé en ce que**
des voies de conduite individuelles avec à chaque fois des revêtements de chaussée différents (8, 9, 10) de la section d'essai (3) peuvent être déplacées transversalement à la direction de conduite et/ou le long de la direction de conduite du véhicule (1).

3. Dispositif d'essai selon l'une quelconque des revendications précédentes,
**caractérisé en ce que**
l'ensemble du dispositif d'essai se trouve dans l'espace intérieur du bâtiment.

4. Dispositif d'essai selon l'une quelconque des revendications précédentes,
**caractérisé en ce que**
l'espace interne du bâtiment est climatisé.

5. Dispositif d'essai selon l'une quelconque des revendications précédentes,
**caractérisé en ce**
**qu'**une unité de montage (7) est prévue pour la préparation et l'acheminement ou l'enlèvement du véhicule (1).

6. Dispositif d'essai selon l'une quelconque des revendications précédentes,
**caractérisé en ce que**
la section d'accélération (2), la section d'essai (3) et la section de retour (4) forment une boucle de conduite.

7. Dispositif d'essai selon l'une quelconque des revendications précédentes,
**caractérisé en ce que**
la section d'essai (3) présente plusieurs revêtements de chaussée (8, 9, 10) dont l'un est disposé dans la région de la section d'essai à parcourir en fonction de l'essai de conduite.

8. Dispositif d'essai selon l'une quelconque des revendications précédentes,
**caractérisé en ce que**
la section d'essai (3) se compose d'une cuvette dans laquelle sont intégrés parallèlement les uns aux autres plusieurs revêtements de chaussée (8, 9, 10, 11) pouvant être remplacés individuellement ou ensemble.

9. Dispositif d'essai selon l'une quelconque des revendications précédentes,
**caractérisé en ce que**
la section d'essai (3) est supportée de manière déplaçable par exemple hydrauliquement sur des roulements à billes ou des paliers lisses ou sur un coussin d'air.

10. Dispositif d'essai selon l'une quelconque des revendications précédentes,
**caractérisé en ce que**
la section d'essai (3) présente des serpentins de refroidissement pour générer une surface verglacée ou enneigée.

11. Dispositif d'essai selon l'une quelconque des revendications précédentes,
**caractérisé en ce que**
la section d'essai (3) peut être mouillée et/ou enneigée avec une installation d'arrosage.

12. Dispositif d'essai selon l'une quelconque des revendications précédentes,
**caractérisé en ce que**
le dispositif d'essai présente plusieurs couronnes rotatives (12, 13, 14) et les régions de virage du dispositif d'essai sont constituées de couronnes rotatives (13, 14).

13. Dispositif d'essai selon l'une quelconque des revendications précédentes,
**caractérisé en ce que**
le véhicule (1) peut être commandé au moyen d'un robot agissant sur la pédale d'accélération ou la pédale de frein ou par une intervention dans l'électronique de bord.

14. Dispositif d'essai selon l'une quelconque des revendications précédentes,
**caractérisé en ce que**
pour l'accélération du véhicule (1), on utilise un moteur linéaire (16) ou un système de câble.

15. Dispositif d'essai selon l'une quelconque des revendications précédentes,
**caractérisé en ce que**
le guide (5) se compose d'un système de rail en boucle fermée.

16. Dispositif d'essai selon l'une quelconque des revendications précédentes,
**caractérisé en ce que** le chariot (6) peut être accouplé à un wagon (15) pour l'acheminement du véhicule (1).

17. Dispositif d'essai selon l'une quelconque des revendications précédentes,
**caractérisé en ce que**
pour le conditionnement et/ou la conduite à chaud des pneus du véhicule, une construction à rouleaux est prévue.

18. Dispositif d'essai selon l'une quelconque des revendications précédentes,
**caractérisé en ce que**
le véhicule (1) est une voiture particulière (PKW) ou un véhicule utilitaire (NKW) ou une motocyclette.
